# DEMANDE DE BREVET EUROPEEN

(11) **EP 2 130 720 A1**
(43) Date de publication de la demande: **09.12.2009**
(21) Numéro de dépôt: 08157809.8
(22) Date de dépôt: 06.06.2008
(51) Int. Cl.: B60Q 1/14

(54) **Commutateur comportant deux cames asymétriques**

(71) Demandeur: Delphi Technologies, Inc., Troy, Michigan 48007 (US)
(72) Inventeur: Lobstein, Roland, 67000, Strasbourg (FR); Fendeleur, Laurence, 67460, SOUFFELWEYERSHEIM (FR)
(74) Mandataire: Robert, Vincent

(57) **Abrégé**

Le commutateur (10) selon l'invention comporte un levier (12) de manipulation solidaire d'une platine (14) qui pivote autour d'un axe transversal (A1), par rapport à une embase, entre une position neutre et une position actionnée. La platine (14) comprend un premier et un second doigts d'encliquetage (18, 30) sollicités élastiquement contre une came de sensation (20) et contre une came d'effort (32). Le profil de la came d'effort (32) est adapté pour produire une courbe d'effort secondaire.

## Description

### DOMAINE TECHNIQUE

La présente invention concerne un commutateur pour un organe de commande sous volant de véhicule permettant par exemple d'actionner les essuie-glaces ou les clignotants et de modifier les réglages liés à ces fonctions.

### ARRIERE-PLAN TECHNOLOGIQUE DE L'INVENTION

L'invention concerne plus particulièrement un commutateur comprenant un levier de manipulation solidaire d'une platine qui pivote autour d'un axe transversal, par rapport à une embase, entre au moins deux positions de commutation comprenant une position neutre et une position actionnée, la platine comprenant un premier doigt d'encliquetage, dit doigt de sensation, sollicité élastiquement contre une came de sensation agencée sur l'embase, la came de sensation comportant au moins un cran d'indexation en position neutre, le profil de la came de sensation étant choisi de manière à produire une courbe d'effort primaire dont les caractéristiques définissent la force nécessaire au pivotement du levier en fonction de la course du levier depuis la position neutre jusqu'à la position actionnée.

Lorsque l'utilisateur manipule le levier, il se produit un pivotement selon plusieurs positions angulaires distinctes stables, clairement identifiables par l'utilisateur du fait du passage du premier doigt d'une portion à l'autre de la surface de la première came. Ces portions sont en général des évidements coopérant avec une extrémité arrondie du premier doigt, lesdits évidements étant séparés par des portions en saillie par exemple de type chevron dont le pic marque le passage d'une première position stable à une seconde position immédiatement adjacente, qui devient également stable lorsque le doigt arrive au fond du nouvel évidement. L'utilisateur ressent les différentes positions par l'intermédiaire de l'effort qu'il doit appliquer sur le levier pour le faire basculer de la première position stable à la seconde position.

Le document EP 0601462, qui concerne un commutateur associé à un levier de commande de l'essuyage, propose d'agencer sur le levier, à côté du premier doigt, un second doigt d'encliquetage prévu pour s'appuyer et glisser sur une surface lisse de l'embase dont le rayon de courbure est centré sur l'axe de pivotement du levier. La solution présentée dans ce document est prévue pour lisser la valeur de la force nécessaire au déplacement d'un cran à l'autre dans une direction d'actionnement déterminée.

Un inconvénient de cette solution est qu'elle augmente la valeur de la force nécessaire au pivotement de manière fixe sans tenir compte de la position du premier doigt d'encliquetage par rapport aux crans d'indexation. De plus, cette solution ne tient pas compte du problème de dispersion des tolérances, notamment concernant la raideur des ressorts qui sollicitent les doigts contre les cames. Ce problème de dispersion des tolérances peut détériorer la fiabilité du commutateur. En particulier, lorsque la raideur du ressort associé au second doigt atteint la limite haute des tolérances et que la raideur du ressort associé au premier doigt atteint la limite basse des tolérances, les frottements exercés par le second doigt peuvent être assez importants pour annuler l'effort moteur produit par la descente du premier doigt vers le fond du cran d'indexation associé. Cette annulation de l'effort moteur a pour conséquence d'empêcher le premier doigt de descendre complètement dans le cran d'indexation. Le commutateur se retrouve alors en position stable alors qu'il occupe une position angulaire intermédiaire entre deux crans d'indexation.

Par ailleurs, en raison des tolérances de fabrication, il est très difficile d'obtenir un état complètement stable du commutateur lorsque le premier doigt d'encliquetage occupe sa position neutre, notamment en raison des jeux dans le guidage en coulissement des doigts d'encliquetage sur la platine. Ceci rend le commutateur particulièrement sensible aux vibrations et cela peut provoquer une usure prématurée des contacts électriques équipant le commutateur.

La présente invention vise à résoudre ces problèmes en proposant un commutateur qui soit plus fiable et de plus grande longévité.

### RESUME DE L'INVENTION

Dans le but de résoudre ces problèmes, l'invention propose un commutateur du type décrit précédemment, **caractérisé en ce que** la platine comporte un second doigt d'encliquetage, dit doigt d'effort, sollicité élastiquement contre une came d'effort de profil déterminé distinct du profil de la came de sensation, le profil de la came d'effort comportant au moins un cran d'indexation en position neutre, et le profil de la came d'effort étant choisi de manière à produire une courbe d'effort secondaire qui s'ajoute à la courbe d'effort primaire pour produire une courbe d'effort principale représentant la somme des deux courbes, le profil de la courbe d'effort principale étant globalement égal au profil de la courbe d'effort primaire mais de hauteur supérieure à la courbe d'effort primaire en valeur absolue.

L'invention permet de répartir les efforts qui s'appliquent à l'actionnement du levier sur deux jeux doigt d'encliquetage/came d'indexation. Ainsi, il est possible de minimiser la raideur et/ou la compression des ressorts utilisés pour le rappel élastique des doigts d'encliquetage, ce qui permet de diminuer les frottements des doigts sur les cames et d'augmenter la longévité du commutateur. De plus, la position neutre du levier est mieux tenue grâce à l'utilisation des deux cames asymétriques qui coopèrent pour bloquer les doigts d'encliquetage en position neutre.

Selon un mode de réalisation avantageux de l'invention, les positions de commutation sont des positions stables, la came de sensation comportant au moins deux crans d'indexation qui correspondent respectivement aux positions neutre et actionnée et qui sont prévus pour recevoir alternativement le doigt de sensation en fonction de la position angulaire de la platine par rapport à l'embase, le profil de la came de sensation étant choisi de manière à produire une courbe d'effort primaire comportant :
- une première phase au cours de laquelle la valeur de la force nécessaire au pivotement du levier est globalement croissante depuis la position neutre jusqu'à un premier point de basculement à partir duquel la valeur de la force est décroissante,
- une seconde phase au cours de laquelle la valeur de la force est décroissante depuis le premier point de basculement jusqu'à atteindre un second point de basculement où la valeur de la force est nulle,
- une troisième phase au cours de laquelle la valeur de la force est négative depuis le second point de basculement jusqu'à la position actionnée, la platine étant motrice pendant cette phase.

Le commutateur selon l'invention comporte donc deux cames asymétriques qui permettent une adaptation optimale des courbes d'effort en fonction des différents points intermédiaires de la courbe d'effort principale.

Avantageusement, la came d'effort comporte deux crans, séparés par un sommet, correspondant respectivement à la position neutre et à la position actionnée, le profil de la came d'effort étant choisi de manière à produire une courbe d'effort secondaire comportant :
- une première phase au cours de laquelle la valeur de la force est globalement constante et égale à une valeur déterminée supérieure à zéro, dite valeur de compensation, la première phase s'étendant depuis la position neutre jusqu'au premier point de basculement défini par la came de sensation,
- une seconde phase au cours de laquelle la valeur de la force est décroissante depuis le premier point de basculement jusqu'à atteindre le second point de basculement défini par la came de sensation,
- une troisième phase au cours de laquelle la valeur de la force est négative depuis le second point de basculement jusqu'à la position actionnée, la platine étant motrice pendant cette phase.

Comme les efforts positifs produits sur le levier par les deux cames s'annulent au même moment, au niveau du second point de basculement, il n'y a pas de risque que l'effort produit par la came d'effort compense l'effort produit par la came de sensation et empêche le basculement du levier jusqu'à sa position actionnée puisque les deux cames et les deux doigts participent à l'effort moteur amenant le levier jusqu'à sa position actionnée. Le commutateur selon l'invention est donc moins sensible aux tolérances de fabrication, notamment aux tolérances s'appliquant sur les ressorts sollicitant les doigts contre les cames, ce qui augmente sa fiabilité.

Selon d'autres caractéristiques de l'invention :
- chaque came comporte deux crans d'indexation symétriques par rapport à un cran neutre correspondant à la position neutre de manière à définir deux positions actionnées opposées ;
- le cran neutre de la came d'effort est délimité par deux rampes montantes rectilignes, de manière à produire un effort continu sur le doigt d'effort jusqu'au premier point de basculement ;
- la came d'effort comporte, entre le second point de basculement et la position actionnée adjacente, une rampe descendante dont l'inclinaison est de préférence constante ;
- le commutateur commande les indicateurs de changement de direction du véhicule ;
- chaque doigt d'encliquetage s'étend globalement suivant une direction radiale par rapport à l'axe de pivotement, et les deux doigts d'encliquetage sont décalés angulairement d'un angle compris entre 90 et 180 degrés, ce qui permet de réduire les efforts qui s'appliquent sur la liaison pivot du commutateur en les répartissant de part et d'autre de l'axe de pivotement ;
- entre le second point de basculement et la position actionnée adjacente, le profil de la came de sensation et le profil de la came d'effort sont sensiblement rectilignes et inclinés de manière que les efforts produits par la came de sensation et les efforts produits par la came d'effort après le second point de basculement soient sensiblement égaux ;
- la came de sensation et la came d'effort sont formées sur deux pièces distinctes.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- la figure 1 est une vue de dessus qui représente schématiquement un commutateur à levier équipé d'une came de sensation et d'une came d'effort coopérant avec des doigts d'encliquetage réalisés conformément aux enseignements de l'invention ;
- la figure 2 est un schéma qui représente les cames et les doigts d'encliquetage associés du commutateur de la figure 1 lorsque le levier est en position neutre ;
- la figure 3 est un diagramme qui illustre les courbes d'effort produits par les cames et les doigts d'encliquetage sur le levier ;
- la figure 4 est un schéma qui illustre le profil de la came de sensation ;
- la figure 5 est un schéma similaire au précédent qui illustre le profil de la came d'effort.

### DESCRIPTION DES MODES DE REALISATION PREFERES

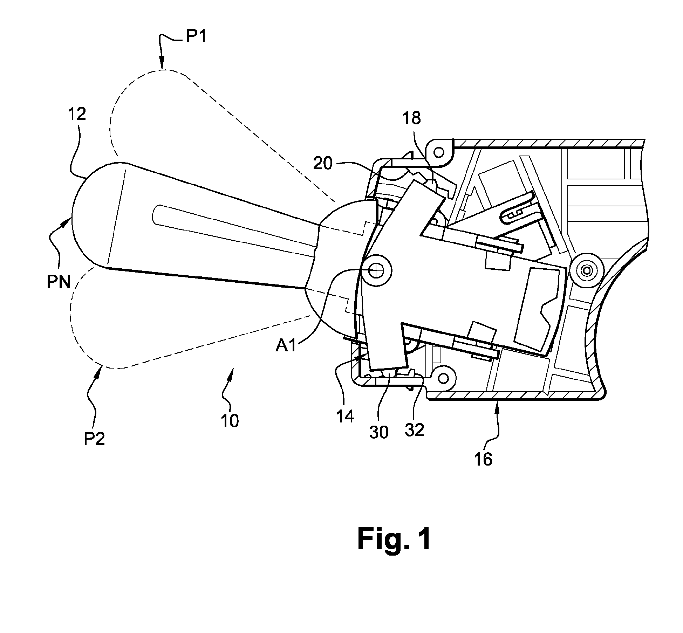

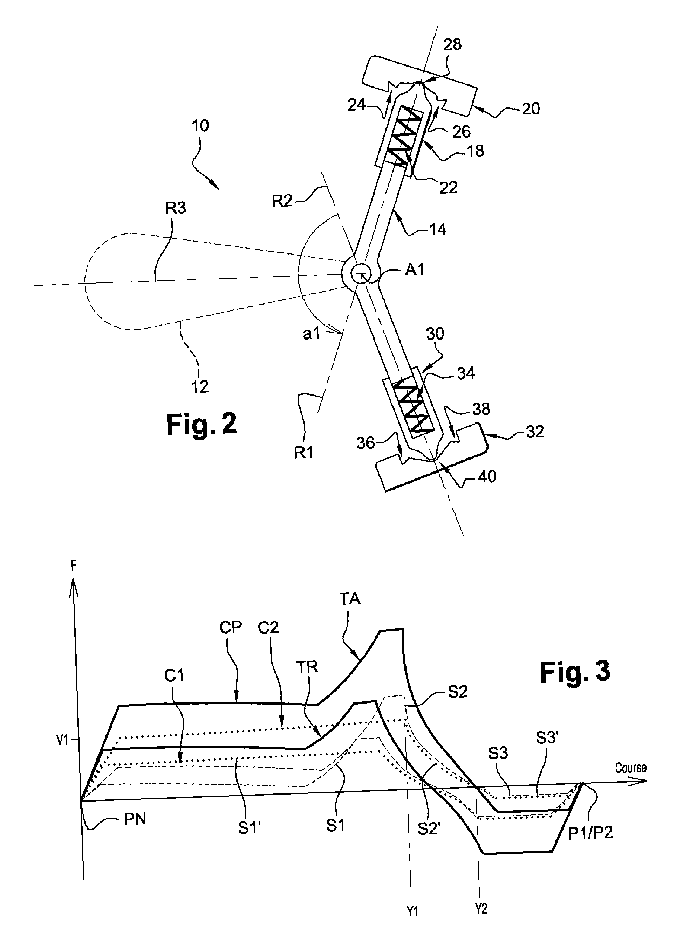

Sur les figures 1 et 2, on a représenté un commutateur 10 prévu pour être monté dans un véhicule sous la forme d'un organe de commande sous volant. Selon l'exemple représenté, le commutateur 10 commande les indicateurs de changement de direction du véhicule.

Le commutateur 10 comprend un levier 12 de manipulation solidaire d'une platine 14 qui pivote autour d'un axe transversal A1, par rapport à une embase 16 agencée sous le volant (non représenté) du véhicule. Le commutateur 10 comporte aussi un boîtier de commande (non représenté) muni de contacts électriques prévus pour déclencher les indicateurs de changement de direction, en fonction de la position angulaire occupée par le levier 12.

Dans la suite de la description, on utilisera à titre non limitatif une orientation transversale suivant l'axe A1 de pivotement et des orientations radiales R par rapport à l'axe A1 de pivotement.

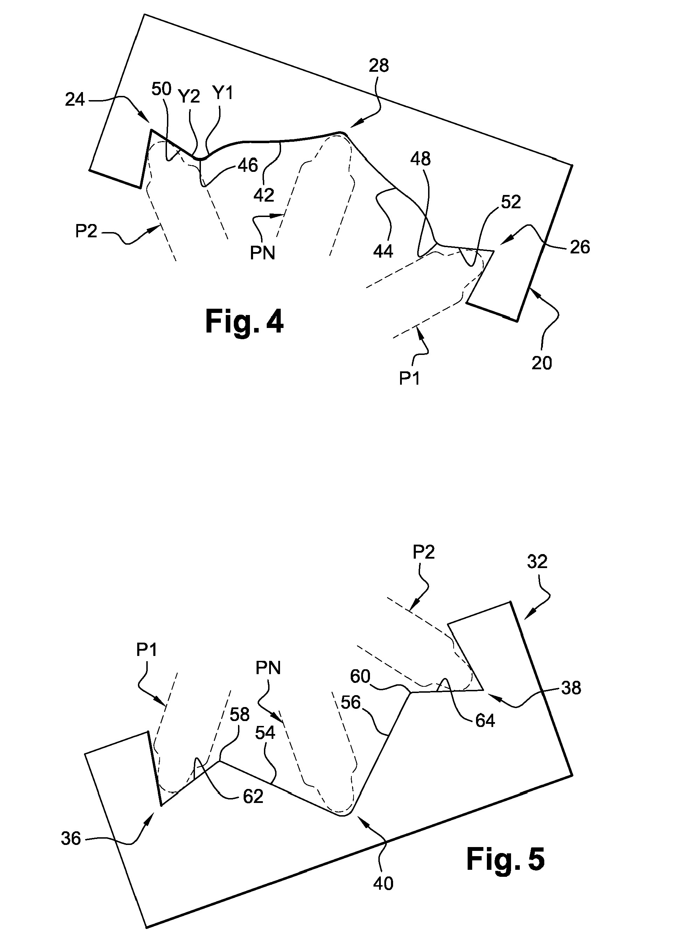

La platine 14 pivote, de part et d'autre d'une position neutre PN stable, représentée sur les figures 1 et 2, vers une première et une seconde positions actionnées P1, P2 qui constituent des positions stables de commutation. Les positions actionnées P1, P2 sont illustrées en traits-tillés sur les figures 4 et 5. L'indexation de ces trois positions angulaires PN, P1, P2 est obtenue au moyen d'un premier doigt d'encliquetage, dit doigt de sensation 18, qui est sollicité élastiquement contre une came de sensation 20 agencée sur l'embase 16. Le doigt de sensation 18 est ici monté coulissant radialement (R1) sur la platine 14 et il est sollicité contre la came de sensation 20 au moyen d'un premier ressort 22.

La came de sensation 20 comporte deux crans d'indexation latéraux 24, 26 symétriques par rapport à un cran neutre 28 correspondant à la position neutre PN de manière à définir les deux positions actionnées P1, P2, le cran neutre 28 et les deux crans d'indexation latéraux 24, 26 recevant alternativement le doigt de sensation 18 en fonction de la position angulaire de la platine 14 par rapport à l'embase 16.

Conformément aux enseignements de l'invention, le commutateur 10 est muni d'un second doigt d'encliquetage, dit doigt d'effort 30, agencé sur la platine 14 et sollicité élastiquement contre une came d'effort 32 agencée sur l'embase 16. Le doigt d'effort 30 est ici monté coulissant radialement (R2) sur la platine 14 et il est sollicité contre la came d'effort 32 au moyen d'un second ressort 34.

Avantageusement, la direction radiale R2 de coulissement du doigt d'effort 30 sur la platine 14 est agencée dans le même plan radial que la direction radiale R1 de coulissement du doigt de sensation 18, et les deux directions de coulissement R1, R2 sont décalées d'un angle a1 compris de préférence entre 90 et 180 degrés. Selon le mode de réalisation représenté, le décalage angulaire entre les deux directions de coulissement R1, R2 est sensiblement égal à 140 degrés et le levier 12 s'étend globalement suivant la bissectrice de l'angle a1 de décalage, de sorte que les deux doigts 18, 30 sont agencés de manière symétrique par rapport à un plan transversal passant par la direction radiale R3 du levier 12. Ainsi, la came d'effort 32 est agencée sensiblement à l'opposé de la came de sensation 20 par rapport à l'axe de pivotement A1, ce qui permet de minimiser les efforts qui s'appliquent sur la liaison pivot de la platine 14 en les répartissant de part et d'autre de l'axe de pivotement A1.

La came d'effort 32 comporte des crans d'indexation qui correspondent à ceux de la came de sensation 20, ici deux crans d'indexation latéraux dits crans d'effort 36, 38 et un cran neutre 40 correspondant respectivement aux crans d'indexation 26, 24, 28 de la came de sensation 20.

Lorsqu'un utilisateur active le levier 12, à partir de la position neutre PN, par exemple pour indiquer un changement de direction à gauche, le levier 12 pivote autour de son axe A1 de sorte que le doigt de sensation 18 et le doigt d'effort 30 suivent les profils de leurs cames 20, 32 respectives. La force F d'activation du levier 12 est donc dépendante de la position angulaire du doigt de sensation 18 et du doigt d'effort 30. La courbe de la force F d'activation du levier 12 en fonction de l'angle du levier 12, c'est-à-dire en fonction du déplacement du levier 12, est appelée courbe d'effort. C'est la force que l'utilisateur doit appliquer sur le levier 12 pour l'amener depuis une position indexée jusqu'à la position indexée adjacente. La courbe d'effort correspond à la sensation haptique de l'utilisateur.

Sur la figure 3, la courbe d'effort principale CP en trait continu représente l'effort total ressenti par l'utilisateur lorsqu'il actionne le levier 12 depuis la position neutre PN jusqu'à une position actionnée P1 et depuis ladite position actionnée P1 jusqu'au retour à la position neutre PN.

La courbe d'effort primaire C1 en traits-tillés représente l'effort partiel produit par l'ensemble came de sensation 20/doigt de sensation 18 lorsque le levier 12 effectue le déplacement mentionné précédemment.

La courbe d'effort secondaire C2 en points-tillés représente l'effort partiel produit par l'ensemble came d'effort 32/doigt d'effort 30 lorsque le levier 12 effectue le déplacement mentionné précédemment.

Chaque courbe d'effort CP, C1, C2 comporte un trajet aller TA, correspondant au déplacement depuis la position neutre PN jusqu'à une position actionnée P1, P2, et un trajet retour TR, correspondant au déplacement depuis la position actionnée P1, P2 jusqu'à la position neutre PN. Le profil du trajet retour TR correspond globalement au profil du trajet aller TA mais décalé d'une valeur déterminée vers l'axe des abscisses en raison du frottement des doigts 18, 30 sur les cames 20, 32.

On comprend que la courbe d'effort principale CP est obtenue en faisant la somme des deux autres courbes d'effort C1, C2.

Le profil de la came de sensation 20 est choisi de manière à produire une courbe d'effort primaire C1 comportant :
- une première phase S1 au cours de laquelle la valeur de la force F est globalement croissante depuis la position neutre PN jusqu'à un premier point de basculement Y1 à partir duquel la valeur de la force F est décroissante,
- une seconde phase S2 au cours de laquelle la valeur de la force F est brusquement décroissante depuis le premier point de basculement Y1 jusqu'à s'annuler en un second point de basculement Y2,
- une troisième phase S3 au cours de laquelle la valeur de la force F est négative depuis le second point de basculement Y2 jusqu'à la position actionnée P1, P2, la platine 14 étant motrice pendant cette phase S3.

A cet effet, comme on peut le voir sur la figure 4, le cran neutre 28 de la came de sensation 20 est délimité par deux rampes montantes 42, 44 symétriques. Chaque rampe 42, 44 est montante jusqu'à un sommet 46, 48 séparant le cran neutre 28 du cran latéral 24, 26 adjacent. Le premier point de basculement Y1 se situe globalement au début de la zone du sommet 46, 48 et le second point de basculement Y2 se situe globalement à la fin de la zone du sommet 46, 48. Chaque rampe montante 42, 44 comporte une partie intermédiaire faiblement inclinée, formant un plateau dans la courbe d'effort, et correspondant à une position du levier 12 dite position autoroute, et une partie finale plus inclinée jusqu'au sommet 46, 48. De l'autre côté du sommet 46, 48, la came de sensation 20 comporte une rampe descendante 50, 52 dont l'inclinaison est de préférence constante.

On notera que le profil de la came de sensation 20 est déterminé de manière à produire une courbe d'effort primaire C1 qui correspond globalement au profil défini par les spécifications s'appliquant au commutateur 10 d'indication de changement de direction.

Conformément aux enseignements de l'invention, le profil de la came d'effort 32 est choisi de manière à produire une courbe d'effort secondaire C2 comportant :
- une première phase S1' au cours de laquelle la valeur de la force F est globalement constante et égale à une valeur déterminée supérieure à zéro, dite valeur de compensation V1, la première phase S1' s'étendant depuis la position neutre PN jusqu'au premier point de basculement Y1 défini par la came de sensation 20,
- une seconde phase S2' au cours de laquelle la valeur de la force F est décroissante depuis le premier point de basculement Y1 jusqu'à atteindre le second point de basculement Y2 défini par la came de sensation 20,
- une troisième phase S3' au cours de laquelle la valeur de la force F est négative depuis le second point de basculement Y2 jusqu'à la position actionnée P1, P2, la platine 14 étant motrice pendant cette phase S3'.

On note que les phases S1', S2', S3' de la courbe secondaire C2 se déroulent en parallèle respectivement des phases S1, S2, S3 de la courbe primaire C1, les points de départ et d'arrivée de chaque phase S1', S2', S3' de la courbe secondaire C2 étant identiques à ceux de la courbe primaire C1.

A cet effet, comme on peut le voir en détail sur la figure 5, le cran neutre 40 de la came d'effort 32 est délimité par deux rampes montantes 54, 56 très inclinées, par rapport à la partie intermédiaire des rampes montantes 42, 44 de la came de sensation 20. L'inclinaison de chaque rampe montante 54, 56 est sensiblement constante jusqu'au sommet 58, 60, de manière à produire un effort continu V1 sur le doigt d'effort 30 jusqu'au premier point de basculement Y1. De l'autre côté du sommet 58, 60, la came d'effort 32 comporte une rampe descendante 62, 64 dont l'inclinaison est de préférence constante.

L'inclinaison de chaque rampe descendante 50, 52 de la came de sensation 20 est choisie de préférence égale à l'inclinaison de chaque rampe descendante 62, 64 de la came d'effort 32 de manière que l'effort moteur produit sur le levier 12 après le second point de basculement Y2 soit réparti de manière sensiblement égale sur les deux doigts 18, 30.

Le choix de ces inclinaisons peut toutefois être différent, si l'on souhaite une répartition différente de l'effort moteur sur les deux doigts 18, 30. Par exemple, si l'on souhaite que 60% de l'effort moteur soit produit par la came de sensation 20, il faut que l'inclinaison des rampes descendantes 52, 54 de la came de sensation 20 soit légèrement plus importante que l'inclinaison des rampes descendantes 62, 64 de la came d'effort 32.

Un avantage du commutateur 10 selon l'invention est qu'il offre un meilleur équilibre statique en position neutre PN. En effet, dans cette position, du fait des tolérances de fabrication et d'assemblage des différents éléments du commutateur 10, les deux doigts 18, 30 ne sont pas centrés tous les deux dans le cran neutre 28, 40 de leurs cames 20, 32 respectives. Il y a au moins un doigt 18, 30 qui s'appuie sur une seule des rampes montantes 42, 44, 54, 56. Dans cette configuration, les doigts 18, 30 sont arcboutés dans leurs systèmes de guidage respectifs ce qui permet de rattraper les jeux existant dans ces systèmes de guidage. Grâce à ce meilleur équilibre statique en position neutre PN, le commutateur 10 est moins sensible aux vibrations, ce qui améliore la qualité et la durée de vie des contacts électrique du commutateur 10, et ce qui diminue les bruits produits par le commutateur 10.

De préférence, la came de sensation 20 et la came d'effort 32 sont formées sur deux pièces distinctes ce qui permet notamment d'utiliser des matériaux différents pour les deux cames 20, 32 de manière à choisir des couples de matière appropriés pour les cames 20, 32 et les doigts d'encliquetage 18, 30 en fonction de l'intensité des frottements souhaitées entre les doigts 18, 30 et les cames 20, 32. Par exemple, on peut choisir pour la came de sensation 20 un matériau possédant un coefficient de friction plus faible que le matériau utilisé pour la came d'effort 32.

L'invention a été décrite en relation avec organe de commande des indicateurs de changement de direction du véhicule. Selon des variantes de réalisation de l'invention (non représentées), l'invention s'applique aussi à d'autres organes de commande sous volant tel qu'un organe de commande de la vitesse d'essuyage du pare-brise du véhicule. L'invention s'applique aussi à des organes de commande dans lesquels il n'y a qu'une position stable, qui est la position neutre, et une position actionnée instable.

## Revendications

1. Commutateur (10), notamment pour un organe de commande sous volant de véhicule, comprenant un levier (12) de manipulation solidaire d'une platine (14) qui pivote autour d'un axe transversal (A1), par rapport à une embase (16), entre au moins deux positions (PN, P1, P2) de commutation comprenant une position neutre (PN) et au moins une position actionnée (P1, P2), la platine (14) comprenant un premier doigt d'encliquetage, dit doigt de sensation (18), sollicité élastiquement contre une came de sensation (20) agencée sur l'embase (14), la came de sensation (20) comportant au moins un cran d'indexation (28) en position neutre (PN), le profil de la came de sensation (18) étant choisi de manière à produire une courbe d'effort primaire (C1) dont les caractéristiques définissent la force nécessaire au pivotement du levier (12) en fonction de la course du levier (12) depuis la position neutre (PN) jusqu'à la position actionnée (P1, P2),
**caractérisé en ce que** la platine (14) comporte un second doigt d'encliquetage, dit doigt d'effort (30), sollicité élastiquement contre une came d'effort (32) de profil déterminé distinct du profil de la came de sensation (20), le profil de la came d'effort (32) comportant au moins un cran d'indexation (40) en position neutre (PN), et le profil de la came d'effort (32) étant choisi de manière à produire une courbe d'effort secondaire (C2) qui s'ajoute à la courbe d'effort primaire (C1) pour produire une courbe d'effort principale (CP) représentant la somme des deux courbes (C1, C2), le profil de la courbe d'effort principale (CP) étant globalement égal au profil de la courbe d'effort primaire (C1) mais de hauteur supérieure à la courbe d'effort primaire (C1) en valeur absolue.

2. Commutateur (10) selon la revendication 1, **caractérisé en ce que** les positions de commutation (PN, P1, P2) sont des positions stables (PN, P1, P2), la came de sensation (20) comportant au moins deux crans d'indexation (24, 26, 28) qui correspondent respectivement aux positions neutre (PN) et actionnée (P1, P2) et qui sont prévus pour recevoir alternativement le doigt de sensation (18) en fonction de la position angulaire de la platine (14) par rapport à l'embase (16), le profil de la came de sensation (18) étant choisi de manière à produire une courbe d'effort primaire (C1) comportant :
- une première phase (S1) au cours de laquelle la valeur de la force (F) nécessaire au pivotement du levier (12) est globalement croissante depuis la position neutre (PN) jusqu'à un premier point de basculement (Y1) à partir duquel la valeur de la force (F) est décroissante,
- une seconde phase (S2) au cours de laquelle la valeur de la force (F) est décroissante depuis le premier point de basculement (Y1) jusqu'à atteindre un second point de basculement (Y2) où la valeur de la force (F) est nulle,
- une troisième phase (S3) au cours de laquelle la valeur de la force (F) est négative depuis le second point de basculement (Y2) jusqu'à la position actionnée (P1, P2), la platine (14) étant motrice pendant cette phase (S3).

3. Commutateur selon la revendication précédente, **caractérisé en ce que** la came d'effort (32) comporte deux crans (36, 38, 40), séparés par un sommet (58, 60), correspondant respectivement à la position neutre (PN) et à la position actionnée (P1, P2), le profil de la came d'effort (32) étant choisi de manière à produire une courbe d'effort secondaire (C2) comportant :
- une première phase (S1') au cours de laquelle la valeur de la force (F) est globalement constante et égale à une valeur déterminée supérieure à zéro, dite valeur de compensation (V1), la première phase (S1') s'étendant depuis la position neutre (PN) jusqu'au premier point de basculement (Y1) défini par la came de sensation (20),
- une seconde phase (S2') au cours de laquelle la valeur de la force (F) est décroissante depuis le premier point de basculement (Y1) jusqu'à atteindre le second point de basculement (Y2) défini par la came de sensation (20),
- une troisième phase (S3') au cours de laquelle la valeur de la force (F) est négative depuis le second point de basculement (Y2) jusqu'à la position actionnée (P1, P2), la platine (14) étant motrice pendant cette phase (S3').

4. Commutateur (10) selon la revendication précédente, **caractérisé en ce que** chaque came (20, 32) comporte deux crans latéraux d'indexation (24, 26, 36, 38) symétriques par rapport au cran neutre (28, 40) correspondant à la position neutre (PN) de manière à définir deux positions actionnées (P1, P2) opposées.

5. Commutateur (10) selon la revendication précédente, **caractérisé en ce que** le cran neutre (40) de la came d'effort (32) est délimité par deux rampes montantes (54, 56) rectilignes, de manière à produire un effort continu (V1) sur le doigt d'effort (30) jusqu'au premier point de basculement (Y1).

6. Commutateur (10) selon la revendication 4 ou 5, **caractérisé en ce que** la came d'effort (32) comporte, entre le second point de basculement (Y2) et la position actionnée (P1, P2) adjacente, une rampe descendante (62, 64) dont l'inclinaison est de préférence constante.

7. Commutateur (10) selon l'une quelconque des revendications 4 à 6, **caractérisé en ce que** le commutateur (10) commande les indicateurs de changement de direction du véhicule.

8. Commutateur (10) selon l'une quelconque des revendications précédentes, **caractérisé en ce que** chaque doigt d'encliquetage (18, 30) s'étend globalement suivant une direction radiale (R1, R2) par rapport à l'axe de pivotement (A1), et **en ce que** les deux doigts d'encliquetage (18, 30) sont décalés angulairement d'un angle (a1) compris entre 90 et 180 degrés.

9. Commutateur (10) selon l'une quelconque des revendications précédentes, **caractérisé en ce que**, entre le second point de basculement (Y2) et la position actionnée (P1, P2) adjacente, le profil de la came de sensation (20) et le profil de la came d'effort (32) sont sensiblement rectilignes et inclinés de manière que les efforts produits par la came de sensation (20) et les efforts produits par la came d'effort (32) après le second point de basculement (Y2) soient sensiblement égaux.

10. Commutateur (10) selon l'une quelconque des revendications précédentes, **caractérisé en ce que** la came de sensation (20) et la came d'effort (32) sont formées sur deux pièces distinctes.
